# EUROPEAN PATENT APPLICATION

(11) **EP 2 075 897 A2**
(43) Date of publication of application: **01.07.2009**
(21) Application number: 08254117.8
(22) Date of filing: 23.12.2008
(51) Int. Cl.: H02K 7/02, H02K 7/08, H02K 7/18

(54) **Electromechanical apparatus**

(30) Priority: 29.12.2007 GB 0725351
(71) Applicant: The Robert Gordon University, Aberdeen, AB10 1FR (GB)
(72) Inventor: MacPherson, Allan, Portlethen, Aberdeenshire AB12 4QU (GB)
(74) Representative: Peter, Kenneth William

(57) **Abstract**

The present invention relates to electromechanical apparatus 40 operable as at least one of a generator and a motor. The apparatus 40 comprises a substantially spherical first arrangement 12 and a second arrangement 14 of substantially circular cross-section extending around and spaced apart from the first arrangement. One of the first and second arrangements is operative as a stator and the other of the first and second arrangements is operative as a rotor. In addition, one of the first and second arrangements comprises an armature and the other of the first and second arrangements comprises a field. Furthermore, the second arrangement is configured such that mass of the second arrangement extends in a direction of an axis of rotation of the rotor in relation to the stator.

## Description

### Field of invention

The present invention relates to electromechanical apparatus operable as at least one of a generator and a motor and in particular but not exclusively to a wind powered generator.

### Background to invention

Motors or generators having spherical components are known. For example, EP 0526774A describes an electric motor having a spherical rotor, which offers performance advantages over motors having rotors of conventional, cylindrical form.

### Statement of invention

The present inventor has appreciated that known motors or generators having spherical components have shortcomings. The present invention has been devised in the light of this appreciation.

According to a first aspect of the present invention, there is provided electromechanical apparatus operable as at least one of a generator and a motor, the apparatus comprising:
a substantially spherical first arrangement; and
a second arrangement of substantially circular cross-section extending around and spaced apart from the first arrangement,
one of the first and second arrangements being operative as a stator and the other of the first and second arrangements being operative as a rotor,
one of the first and second arrangements comprising an armature and the other of the first and second arrangements comprising a field, and
the second arrangement being configured such that mass of the second arrangement extends in a direction of an axis of rotation of the rotor in relation to the stator.

The term armature as used herein means the component of the apparatus that produces power. The term field as used herein means the component of the apparatus that produces a substantially constant magnetic field. In accordance with known principles, the field and armature move in relation to each other such that the electromechanical apparatus is operative as a generator if the electromechanical apparatus is driven by a source, such as wind power, or as a motor if the electromechanical apparatus drives a load.

More specifically, the second arrangement may comprise a first component extending around the axis of rotation and a second component having a profile that extends generally in the direction of the axis of rotation and that follows a non-linear path.

More specifically, the second component may have a curved profile. More specifically, a radius of curvature of the profile of the second component may be substantially the same as a radius of curvature of the first arrangement.

Alternatively or in addition, the second arrangement may comprise at least first and second components at least one of which bears an operative part of one of the armature and the field, the components being configured such that they define respective planes that intersect each other.

The configuring of the components of the second arrangement can provide for performance improvements when the electromechanical apparatus is used in certain applications. More specifically, an improvement can be seen when the electromagnetic apparatus is used where it is driven by a fluctuating source or where it drives a fluctuating load. For example, when the electromagnetic apparatus is operative as a generator it might be driven by a fluctuating source, such as wind power. Also, under such circumstances, the configuration of the components of the second arrangement can help balance the second arrangement and smooth fluctuations in the source, e.g. the wind, or in the load. Each of the first and second components may be configured such that its mass is distributed across its respective plane.

One of the first and second components may be operative as a fly-wheel. Thus, when there is a fluctuation in the source or the load, the component that is operative as a fly-wheel may assist in keeping the stator rotating. For example, where the electromagnetic apparatus is operative as a generator that is driven by the wind, the component that is operative as a fly-wheel may assist in keeping the stator rotating when the wind speed decreases. Thus, the component that is operative as a fly-wheel may be of a predetermined mass and/or radius having regard to conditions of fluctuation and having regard to the mass and/or radius of the other of the first and second components.

More specifically, the apparatus may be configured such that the first arrangement is operative as a stator and the second arrangement is operative as a rotor.

Alternatively or in addition, the first arrangement may comprise an armature and the second arrangement may comprise a field.

Alternatively or in addition, the first and second components may be disposed on the electromechanical apparatus such that their respective planes are substantially orthogonal to each other.

Alternatively or in addition, an axis of rotation of the rotor when the apparatus is in use may lie substantially on a plane defined by the second component.

Alternatively or in addition, the apparatus may comprise at least one further component defining a plane that intersects the plane defined by the second component with an axis of rotation of the rotor lying substantially on a plane defined by the at least one further component.

Alternatively or in addition, each of the first and second components may be of generally planar form.

Alternatively or in addition, each of the first and second components may have a substantially circular footprint.

Alternatively or in addition, each of the first and second components may be substantially annular in form.

More specifically, respective operative parts may extend at least partly around the annular first and second components.

Alternatively or in addition, a mass of the first component may be substantially the same as a mass of the second component. Thus, where each of the first and second components are substantially annular in form, where the first component rotates about its centroid and its centroid lies substantially on the axis of rotation of the rotor, and where the second component is disposed substantially orthogonally to the first component, a moment of inertia of the first component is substantially half a moment of inertia of the second component.

Alternatively or in addition, the field may comprise at least one of a permanent magnet and an electromagnet.

More specifically, the field may comprise at least one NdFeB permanent magnet.

Alternatively or in addition, where the field comprises at least one permanent magnet the field may comprise a Halbach array.

Alternatively or in addition, the apparatus may comprise a bearing between the first and second arrangements.

More specifically, the bearing may comprise a magnetic bearing comprising at least one of a permanent magnet and an electromagnet.

Alternatively or in addition, where the field comprises at least one permanent magnet a surface of the at least one permanent magnet which opposes the armature bearing arrangement may have a curved profile. Thus, where the field forms part of the second arrangement the curve of the profile may be determined to provide for a substantially constant gap between the opposing surface along the profile of the permanent magnet and the exterior surface of the substantially spherical first arrangement.

Alternatively or in addition, the armature may comprise a plurality of spaced apart coils. The coils may, for example, be spaced apart around a surface of the spherical arrangement facing a surface of the second arrangement.

More specifically, a coil may be formed of copper.

Alternatively or in addition, the first arrangement may comprise a substantially spherical member which bears on or at its exterior surface one of the armature and the field.

More specifically, the spherical member may be formed at least in part of an organic material, such as rubber.

Alternatively, the spherical member may be formed at least in part of a metal, such as aluminium.

Alternatively or in addition, the apparatus may be configured such that there is a gap between the first arrangement and the second arrangement of less than 5 mm.

More specifically, the apparatus may be configured such that the gap is between substantially 1 mm and substantially 2 mm.

Alternatively or in addition, the first arrangement may have a diameter of less than 200 mm. More specifically, the first arrangement may have a diameter of one of substantially 100 mm and substantially 50 mm.

Alternatively or in addition, the second arrangement may be formed at least in part of at least one of: a metal, such as brass; and a composite material, such as a carbon fibre composite.

Alternatively or in addition, where the second arrangement is a rotor, the second arrangement may comprise at least one blade extending therefrom.

More specifically, the at least one blade may extend from the first component.

More specifically, at least one of a mass and a radius of the first component may be of a predetermined value having regard to at least one of a mass and a radius of the second component and fluctuation in operating conditions, such as fluctuation in wind speed where the electromechanical apparatus is a wind powered generator.

Alternatively or in addition, the electromechanical apparatus may be configured to change at least one of a mass and a radius of the first component. Thus, a moment of inertia of the first component may be changed to take account of a change in operating conditions.

More specifically, the electromechanical apparatus may be configured for changing from one first component to another first component, the other first component having at least one of a different mass and a different radius compared with the one first component.

Alternatively or in addition, where the first arrangement is a stator and comprises a field, the field may comprise at least one superconducting element and the apparatus may be configured to convey a coolant to and from the at least one superconducting element.

More specifically, the at least one superconducting element may comprise YBCO (Yttrium Barium Copper Oxide).

Alternatively or in addition, the coolant may comprise liquid nitrogen.

Alternatively or in addition, the apparatus may comprise a pipe to convey the coolant to and from the superconducting element.

More specifically, the pipe may form at least part of a shaft on which the rotor rotates.

Alternatively or in addition, where the rotor comprises an armature the spaced apart coils may be formed at least in part of a carbon composite.

According to a second aspect of the present invention, there is provided a generator comprising electromechanical apparatus according to the first aspect of the present invention.

More specifically the generator may be configured to be wind powered. Thus, the rotor may comprise at least one blade extending therefrom. The at least one blade may be operative to engage with wind so as to move the rotor in relation to the stator.

Further embodiments of the second aspect of the present invention may comprise one or more features of the first aspect of the present invention.

According to a further aspect of the present invention there is provided electromechanical apparatus operable as at least one of a generator and a motor, the apparatus comprising:
a substantially spherical stator comprising one of an armature and a field; and
a rotor of substantially circular cross-section extending around and spaced apart from the stator, the rotor comprising the other of the armature and the field,
the rotor being configured such that mass of the rotor extends in a direction of an axis of rotation of the rotor about the stator.

More specifically, the rotor may comprise at least first and second components at least one of which bears an operative part of the armature or field, the first and second components being configured such that they define respective planes that intersect each other.

Further embodiments of the further aspect of the present invention may comprise one or more features of any previous aspect of the present invention.

### Brief description of the drawings

Further features and advantages of the present invention will become apparent from the following specific description, which is given by way of example only and with reference to the accompanying drawings, in which:
Figure 1 shows a first embodiment of the present invention;
Figure 2 is a schematic representation of part of the first embodiment shown in Figure 1;
Figure 3a is a schematic representation of a second embodiment of the present invention;
Figure 3b is a schematic representation of a further embodiment of the present invention;
Figure 4 shows coil voltage at 6 metres per second wind speed for the first form of the first embodiment;
Figure 5 shows maximum, minimum and RMS voltages at 6 metres per second wind speed for the first form of the first embodiment;
Figure 6 shows maximum, minimum and RMS voltages at 9 metres per second wind speed for the first form of the first embodiment;
Figure 7 shows series coil voltage at 6 metres per second wind speed for the first form of the first embodiment;
Figure 8 shows coil voltage at 6 metres per second wind speed for the second form of the first embodiment; and
Figure 9 shows coil voltage at 9 metres per second wind speed for the second form of the first embodiment.

### Specific description

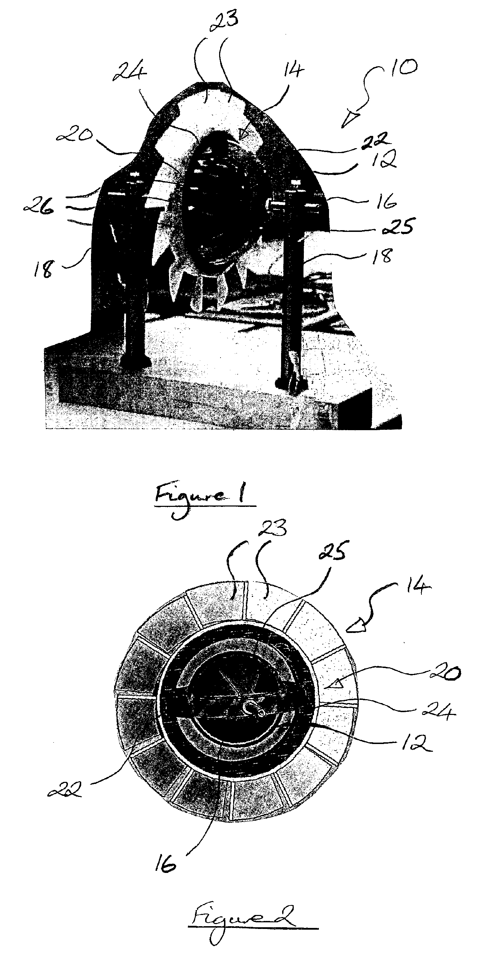

Figure 1 shows a wind powered generator 10 according to a first embodiment of the present invention. The wind powered generator 10 comprises a substantially spherical stator 12 and a rotor 14 of substantially circular cross section. The rotor 14 rotates on a hollow shaft 16, which is supported between two spaced apart support members 18. The rotor 14 comprises a first component 20 and a second component 22, which are attached to each other such that, in use, they rotate about the stator 12 on magnetic bearings (not shown) to reduce friction. The magnetic bearings may be formed of permanent magnets or electromagnets of well known design. Alternatively, the magnetic bearings may be formed of a Halbach array. The Halbach array is described below. The first component 20 comprises an annular member 24 formed of brass and a plurality of blades formed of Perspex® 23 attached to and extending from the exterior surface of the annular member 24. The second component 22 comprises an annular member formed of brass. The moment of inertia of the first component is 0.5MR² and the moment of inertia of the second component is MR². The mass and radius of the first and second components are determined having regard to the operation of the first component as a fly-wheel, which keeps the rotor rotating when there is a drop in wind-speed. The masses of the first and second components are substantially the same. The first and second components 20, 22 are disposed in relation to each other such that the planes defined by the annular members of the first and second components intersect each other and are substantially orthogonal to each other. NdFeB permanent magnets (not shown) are mounted on and spaced apart from each other on the inner surface (i.e. the surface facing the stator) of the annular member of the second component 22. The surface of each permanent magnet facing the stator has a radius of curvature matched to the radius of curvature of the exterior surface of the stator whereby the air gap between the surface of the permanent magnet and the stator surface is substantially the same across the surface of the permanent magnet. Thus, the rotor 14 constitutes the field of the generator 10. The stator 12 comprises a substantially spherical member 25 and six lengths of coiled copper wire 26, which are spaced apart from each other and attached to the exterior of the spherical member 25. Thus, the stator 12 constitutes the armature of the generator 10. The air gap between the interior surface of the rotor 14 and the exterior surface of the stator 12 is between substantially 1 mm and substantially 2 mm. Electrical power produced by the generator 10 is conveyed from the coiled copper wire 26 of the stator by means of electrical wires which pass through the hollow shaft 16 away from the generator. In accordance with conventional practice, soft iron cores may be provided on the coiled copper wire 26 or indeed elsewhere on current carrying components to increase the flow of magnetic flux.

Figure 2 shows the stator 12 and rotor 14 arrangement of the embodiment of Figure 1 in more detail. The component parts shown in Figure 2 share the same numerals as the components shown in Figure 1. Therefore the reader's attention is directed to the immediately preceding paragraph for a description of the components shown in Figure 2.

In a first form of the embodiment of Figures 1 and 2, the spherical member 25 is formed of rubber and has a diameter of substantially 50 mm. Each of the six lengths of coiled copper wire 26 has two hundred turns. The annular member of the second component 22 has eighteen 0.4 T NdFeB permanent magnets; the north pole of every magnet faces towards the stator 12.

In a second form of the embodiment of Figures 1 and 2, the spherical member 25 is formed of aluminium and has a diameter of substantially 100 mm. Each of the six lengths of coiled copper wire 26 has one hundred turns of copper wire that is thicker than the copper wire used in the first form. The annular member of the second component 22 has fourteen 1.3 T NdFeB permanent magnets; the north pole of every alternate magnet faces towards the stator 12 to induce a sinusoidal signal in the stator.

In another form of the embodiment, a Halbach array is used instead of discrete permanent magnets on the rotor. The Halbach array is operative to augment the magnetic field on one side of the array while cancelling the field to near zero on the other side of the array. The Halbach array is well known in the art and thus will be described no further here.

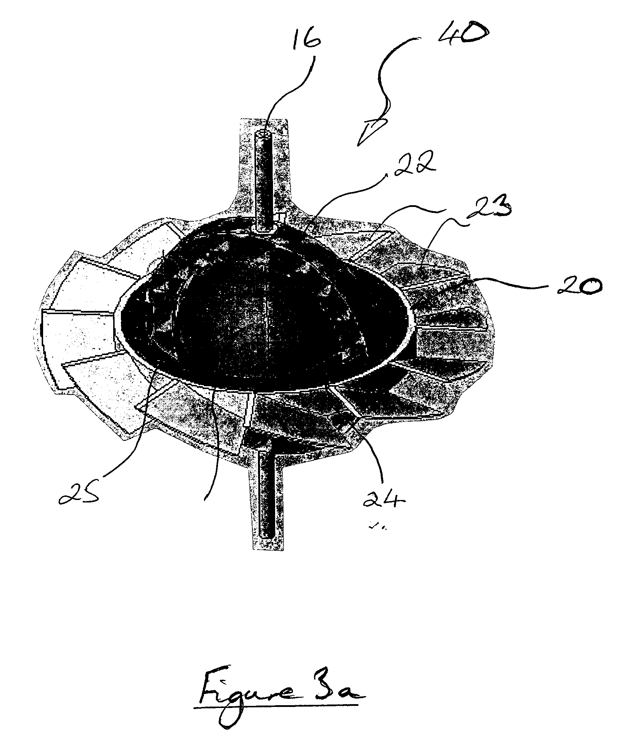

Figure 3a shows a representation of a rotor and stator arrangement 40 of a generator according to a second embodiment of the present invention. The rotor and stator arrangement 40 shares components in common with the first embodiment shown in Figures 1 and 2 and thus the reader's attention is directed to the description provided above with reference to Figures 1 and 2 for a description of such common components. The arrangement of Figure 3a is configured differently to the arrangement of Figures 1 and 2. More specifically, in the arrangement of Figure 3a the stator bears the field and the rotor bears the armature. In Figure 3a the field is formed by YBCO segments 42, which are attached to the exterior of spherical member 25 of the stator. The armature in Figure 3a is formed by carbon composite coils (not shown) which are disposed in the inner facing surface of the annular member of the second component 22. Electrical connection to the carbon composite coils is by means of electrical wires (not shown) that pass through the hollow shaft 16. The YBCO segments 42 are cooled by means of liquid nitrogen which is conveyed to and from the YBCO segments 42 by pipe (not shown) that passes through the hollow shaft 16. Otherwise the form of the second embodiment is the same as the form of the first embodiment.

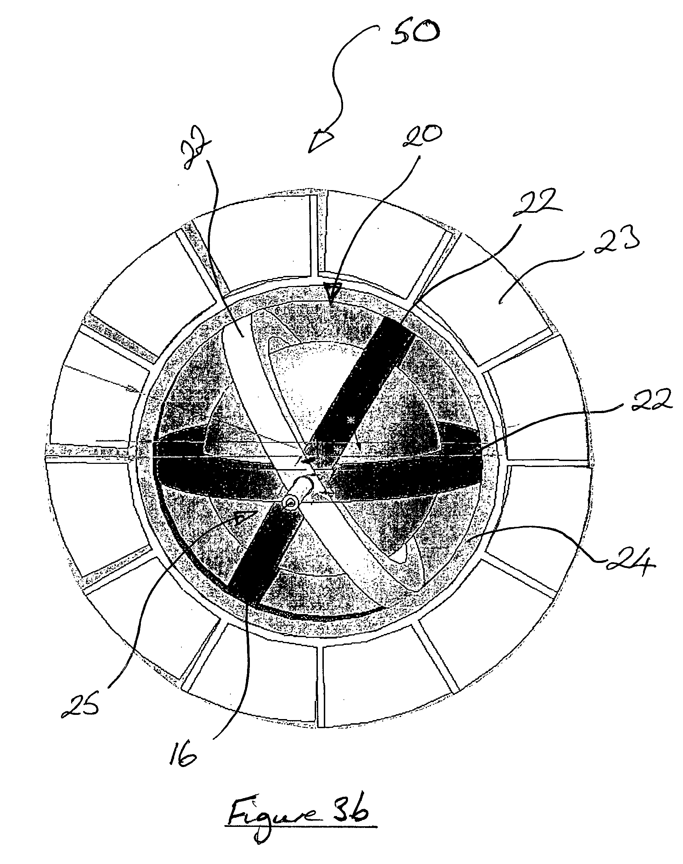

Figure 3b shows a representation of a rotor and stator arrangement 50 of a generator according to a further embodiment of the present invention. The embodiment of Figure 3b comprises the same components as the embodiment shown in Figure 3a, except as described below, and thus the reader is referred to the description given above for Figure 3a for components in common. Instead of the single second component 22 of Figure 3a, the embodiment of Figure 3b comprises three second components 22, which are spaced apart from each other such that adjacent second components define an angle of substantially 120 degrees between them.

In an un-illustrated form, the wind powered generator 10 is configured to allow for the first component 20 to be changed from one of a first predetermined moment of inertia to one of a second predetermined moment of inertia. For example, one of the first components may be of a smaller radius and the other of the first components may be of a greater radius. The first component 20 may be changed to take account of a change in operating conditions, e.g. an increase in prevailing wind speed.

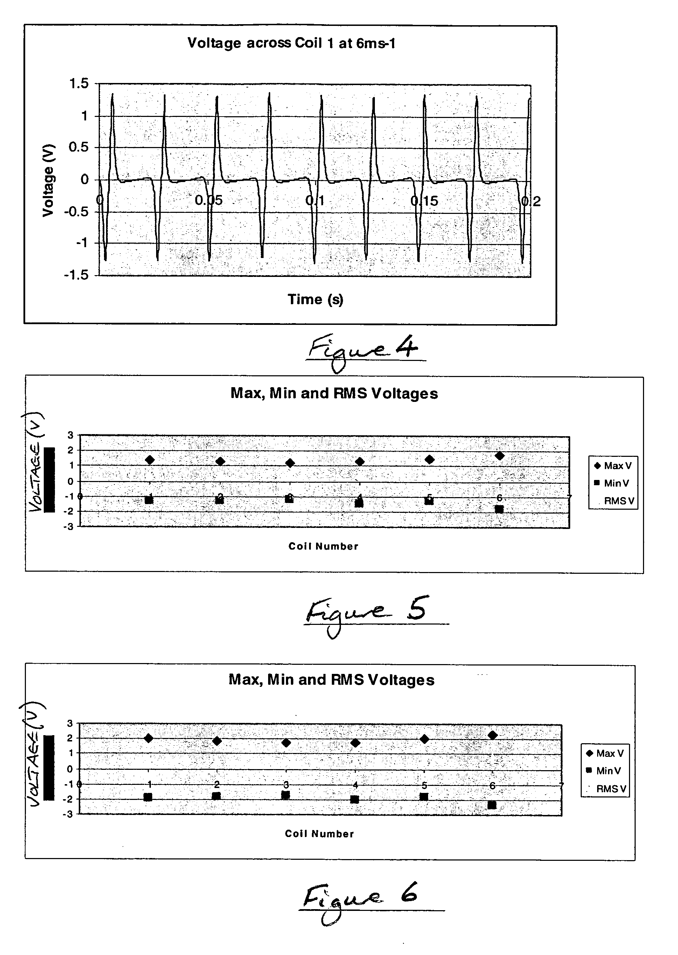

Operation of the first and second forms of the first embodiment will now be described with reference to Figures 4 to 9. In use, the passage of wind acts upon the blades 23 to cause the rotor 14 to rotate about the stator 12. In accordance with the well known principles of electromagnetic induction, rotation of the rotor about the stator induces an electrical current in the coils of the stator which is conveyed for use elsewhere by means of the electrical wires passing through the hollow shaft 16. The orthogonal disposition of the annular members of the first and second components has been found to balance the rotor, which in turn reduces the effects of fluctuations in speed of movement of the rotor, such fluctuations being inherent in wind powered generators.

Each of the first and second forms was situated in a wind tunnel where wind flow tends to be laminar. For the first form, the voltage and current from each of the coils was measured at different wind speeds. Voltage and current data was acquired by means of a National Instruments data-acquisition hardware module operating in conjunction with a Personal Computer running the Labview program. Coil current was measured by connecting a 1 kΩ shunt resistor across the coil. Opposing coils (i.e. coils 1 and 4; coils 2 and 5; and coils 3 and 6) were also connected in series to provide a three-phase output and measurements taken as described above. For the second form, one coil was the subject of measurement after it was determined that the output from coil was comparable with the outputs from the other coils.

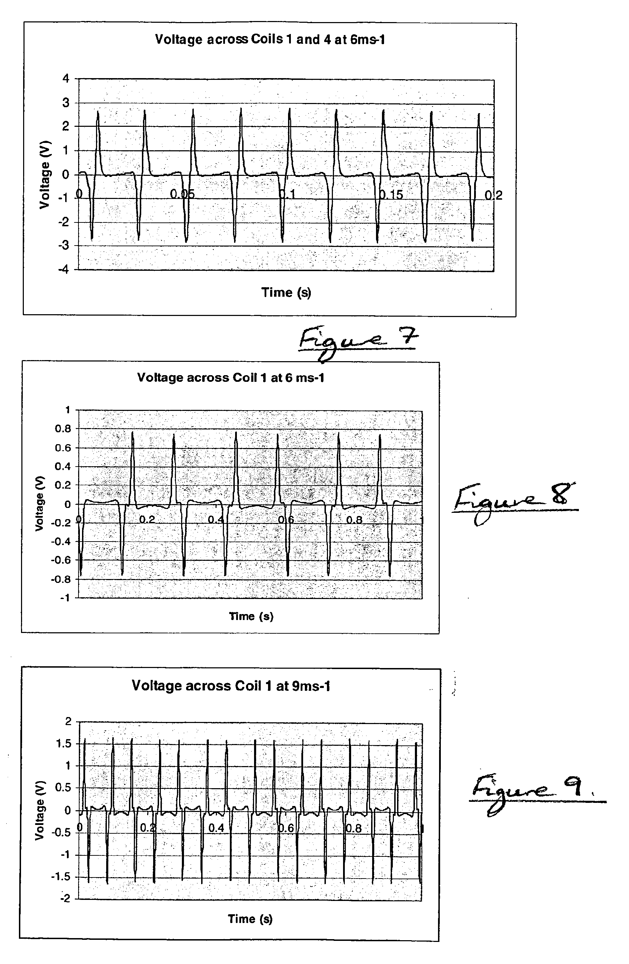

Figure 4 shows the voltage across a first coil for the first form at a wind speed of 6 metres per second over a period of 0.2 seconds. Other coils were found to have similar voltage outputs to the voltage output for the first coil of Figure 4. This is supported by Figures 5 and 6, which show coil voltage across each of the six coils at a wind speed of respectively 6 metres per second and 9 metres per second. When two coils were connected in series (to form one phase of a three phase arrangement) the voltage was measured to be twice the voltage for one coil as is shown in Figure 7, which shows the voltage across opposing coils one and four at a wind speed of 6 metres per second. As can be seen from the Figures, at 6 metres per second wind speed the frequency of the output voltage was between 41 and 44 Hz, which corresponds to a rotor speed of about 21.5 Hz or 1290 rpm. At 9 metres per second wind speed, the frequency of the output voltage was between 70 and 75 Hz, which corresponds to a rotor speed of 2150 rpm.

Figure 8 shows the voltage output for a first coil of the second form at a wind speed of 6 metres per second. Figure 9 shows the voltage output for the first coil of the second form at a wind speed of 9 metres per second. The rotor of the second form rotated at 200 rpm and 430 rpm at respective wind speeds of 6 and 9 metres per second.

## Claims

1. Electromechanical apparatus operable as at least one of a generator and a motor, the apparatus comprising:
a substantially spherical first arrangement; and
a second arrangement of substantially circular cross-section extending around and spaced apart from the first arrangement,
one of the first and second arrangements being operative as a stator and the other of the first and second arrangements being operative as a rotor,
one of the first and second arrangements comprising an armature and the other of the first and second arrangements comprising a field, and
the second arrangement being configured such that mass of the second arrangement extends in a direction of an axis of rotation of the rotor in relation to the stator.

2. Apparatus according to claim 1, in which the second arrangement comprises a first component extending around the axis of rotation and a second component having a profile that extends generally in the direction of the axis of rotation and that follows a non-linear path.

3. Apparatus according to claim 2, in which the second component has a curved profile, a radius of curvature of the profile of the second component being substantially the same as a radius of curvature of the first arrangement.

4. Apparatus according to any one of the preceding claims, in which the second arrangement comprises at least first and second components at least one of which bears an operative part of one of the armature and the field, the components being configured such that they define respective planes that intersect each other, each of the first and second components being configured such that its mass is distributed across its respective plane and one of the first and second components being operative as a fly-wheel.

5. Apparatus according to claim 4, in which the apparatus is configured such that the first arrangement is operative as a stator and the second arrangement is operative as a rotor, the first arrangement comprises an armature and the second arrangement comprises a field.

6. Apparatus according to any one of claims 2 to 5, in which the apparatus comprises at least one further component defining a plane that intersects the plane defined by the second component with an axis of rotation of the rotor lying substantially on a plane defined by the at least one further component.

7. Apparatus according to any one of claims 2 to 6, in which each of the first and second components is substantially annular in form.

8. Apparatus according to any one of claims 2 to 7, in which a mass of the first component is substantially the same as a mass of the second component.

9. Apparatus according to any one of the preceding claims, in which the field comprises a Halbach array.

10. Apparatus according to any one of the preceding claims, in which the apparatus comprises a bearing between the first and second arrangements, the bearing comprising a magnetic bearing comprising at least one of a permanent magnet and an electromagnet.

11. Apparatus according to any one of the preceding claims, in which the armature comprises a plurality of spaced apart coils.

12. Apparatus according to any one of the preceding claims, in which the first arrangement comprises a substantially spherical member which bears on or at its exterior surface one of the armature and the field.

13. Apparatus according to any one of the preceding claims, in which the second arrangement is a rotor and the second arrangement comprises at least one blade extending therefrom.

14. Apparatus according to any one of the preceding claims, in which the first arrangement is a stator and comprises a field, the field comprises at least one superconducting element and the apparatus is configured to convey a coolant to and from the at least one superconducting element.

15. A generator comprising electromechanical apparatus according to any one of the preceding claims, the generator being configured to be wind powered.
